# EUROPEAN PATENT APPLICATION

(11) **EP 4 533 960 A1**
(43) Date of publication of application: **09.04.2025**
(21) Application number: 23816030.3
(22) Date of filing: 29.05.2023
(51) Int. Cl.: A23L 27/50

(54) **POWDERED SOY SAUCE AND MANUFACTURING METHOD THEREOF**

(30) Priority: 30.05.2022 JP 2022087924
(71) Applicant: Kikkoman Corporation, Noda-shi, Chiba 278-8601 (JP)
(72) Inventor: WATANABE, Katsumi, Noda-shi, Chiba 278-8601 (JP); OKABE, Hiromi, Noda-shi, Chiba 278-8601 (JP); TAKAHAGI, Yasushi, Noda-shi, Chiba 278-8601 (JP)
(74) Representative: Maiwald GmbH
(86) International application number: PCT/JP2023/019992
(87) International publication number: WO 2023/234273

(57) **Abstract**

The present invention relates to a powdered soy sauce containing a soy sauce residue and having an average value of aspect ratios of 0.85 to 1, and a method for producing the powdered soy sauce, including a step of adding a soy sauce residue to a liquid soy sauce and then conducting a dry-powdering process on the liquid soy sauce.

## Description

### TECHNICAL FIELD

The present invention relates to a powdered soy sauce and a production method thereof.

### BACKGROUND ART

Although soy sauces have been used mainly in liquid form, recently, multiple types of powdered soy sauce have been developed and are available on the market. Regarding the applications of powdered soy sauces, powdered soy sauces have been used for a base of instant ramen soup and the like but are currently applied more widely in the fields of powdered seasonings, frozen foods, processed meat and the like. Commercial powdered soy sauces are mainly produced by subjecting a liquid soy sauce to a dry-powdering process such as spray drying.

There is a problem that the powdered soy sauce has a so-called heating solidification property in which the powdered soy sauce solidifies when the sugar and amino acids contained in the powdered soy sauce undergo a Maillard reaction by heating to generate moisture. There is a problem that the powdered soy sauce has a so-called moisture absorption solidification property in which the powdered soy sauce solidifies by absorbing moisture in the air because a large amount of components that easily cause moisture absorption, such as salt, sugar, and amino acids, are included in the powdered soy sauce.

Various techniques have been proposed in order to improve the above solidification properties (the heating solidification property and the moisture absorption solidification property) of a powdered soy sauce. A method of increasing the glass transition temperature (Tg) of the powder by adding a carbohydrate having a high molecular weight, such as maltodextrin, and decreasing the hygroscopicity and the like is adopted (see Non Patent Literatures 1 to 3). Moreover, a method of powdering after adding a moisture-absorbing, solidification-preventing agent, such as potassium alginate having a reduced molecular weight, gelatin, dextrin, and corn starch, to a soy sauce is also known (for example, see Patent Literatures 1 to 5).

Here, a method for preventing solidification due to moisture absorption by adding and mixing wheat or corn fiber to a seasoning food containing salt or a powdery spice composition having high moisture absorbability such as onion is known (see Patent Literature 6).

A powdered soy sauce obtained by adsorbing a soy sauce to the dried and crushed brewed soy sauce residue and drying, crushing, or granulating the mixture is disclosed (see Patent Literature 7).

### CITATION LIST

### PATENT LITERATURE

Patent Literature 1: JP2011-244711A
Patent Literature 2: JPS46-28839B
Patent Literature 3: JP2767679B
Patent Literature 4: JP3441219B
Patent Literature 5: JP2001-037440A
Patent Literature 6: JPH05-84048A
Patent Literature 7: JPS53-127898A

### NON-PATENT LITERATURE

Non Patent Literature 1: Sablani, S.S., Shrestha, A.K, Bhandari, B.R. (2008). Journal of food Engineering, 87,416-421.
Non Patent Literature 2: Cai, Y. Z., Corke, H. (2000). Journal of Food Science, 65, 1248-1252.
Non Patent Literature 3: Ersus, S., Yurdagel, U. (2007). Journal of Food Engineering, 80, 805-812.

### SUMMARY OF INVENTION

### TECHNICAL PROBLEM

Maltodextrin described in NPLs 1 to 3, however, has a problem because the hygroscopicity and the stickiness increase when maltodextrin is exposed to an environment at a high relative humidity due to its amorphous property, and maltodextrin is not sufficient for improving the solidification resistance of a powdered soy sauce.

The powdered soy sauces described in PTLs 1 to 5, which were produced by adding potassium alginate having a reduced molecular weight, gelatin, dextrin, corn starch, or the like to a soy sauce, could not sufficiently improve the solidification resistance.

On the other hand, the method described in PTL 6, which prevents solidification by adding fiber of grains to a powdery salt-containing composition having high hygroscopicity, does not disclose any powdered soy sauce and is a technique directed to prevention of solidification of a powdery spice composition.

In the powdered soy sauce described in Patent Literature 7 produced through the step of adsorbing the soy sauce to the dried and crushed brewed soy sauce residue, the material tends to clump before drying, and in order to mix them uniformly, it is necessary to perform stirring in small amounts at a time, which requires time and effort for production. Therefore, implementation on a business scale has been found to be inappropriate. When powdered soy sauce is produced through a dry-powdering process, the particles are irregular, making it impossible to achieve the aspect ratio described in the present invention below, and thus the heating solidification property is not improved.

An object of the present invention is to provide a powdered soy sauce having sufficient heating solidification resistance and moisture absorption solidification resistance, and a production method thereof.

### SOLUTION TO PROBLEM

As a result of intensive studies to solve the above problems, the present inventors have found that the above problems can be solved by using a powdered soy sauce containing a soy sauce residue and having an average aspect ratio in a specific range, and the present invention has been completed on the basis of such findings.

That is, the present invention is as follows.
[1] A powdered soy sauce, comprising a soy sauce residue and having an average value of aspect ratios of 0.85 to 1.
[2] The powdered soy sauce according to [1] above, wherein the soy sauce residue is contained at 6.0 mass% to 50 mass% as a solid content based on the powdered soy sauce.
[3] The powdered soy sauce according to [1] or [2] above, which is obtainable by dry-powdering a liquid soy sauce to which the soy sauce residue is added.
[4] A method for producing a powdered soy sauce, the method comprising a step of adding a soy sauce residue to a liquid soy sauce and then conducting a dry-powdering process on the liquid soy sauce.

### ADVANTAGEOUS EFFECTS OF INVENTION

According to the present invention, a powdered soy sauce having sufficient heating solidification resistance and moisture absorption solidification resistance, and a production method thereof can be provided.

### BRIEF DESCRIPTION OF DRAWINGS

[FIG. 1] FIG. 1 is a graph showing a solidification strength in a heating solidification test of a powdered soy sauce evaluated in Experimental Example 1.
[FIG. 2] FIG. 2 is a graph showing a solidification strength in a moisture absorption solidification test of the powdered soy sauce evaluated in Experimental Example 1.
[FIG. 3] FIG. 3 is a microscopic image (100 times) of a powdered soy sauce (Test Example 4) produced by adding a powdered soy sauce residue to a liquid soy sauce and then performing spray drying in Experimental Example 1 and the like.
[FIG. 4] FIG. 4 is a microscopic image (100 times) of a powdered soy sauce (Test Example 13) obtained by adding a powdered soy sauce to a powdered soy sauce residue in Experimental Example 3.
[FIG. 5] FIG. 5 is a microscopic image (100 times) of a powdered soy sauce (Test Example 14) produced by adding a liquid soy sauce to a powdered soy sauce residue in Experimental Example 3.

### DESCRIPTION OF EMBODIMENTS

The structures and preferable modes of the present invention will be described in further detail below. In this description, "A to B" indicating a range means "A or more and B or less". Moreover, in this description, "weight" and "mass" and "weight%" and "mass%" are each regarded as synonyms.

### <Powdered soy sauce>

A powdered soy sauce of an embodiment of the present invention contains a soy sauce residue and has an average value of aspect ratios of 0.85 to 1. This is based on the finding that remarkably good heating solidification resistance and moisture absorption solidification resistance (hereinafter, also collectively referred to as "solidification resistance") are obtained by containing a soy sauce residue in the powdered soy sauce of the present embodiment.

The reason why the powdered soy sauce of the present embodiment has good solidification resistance due to the inclusion of a soy sauce residue is not clear, but is presumed to be as follows. That is, it is presumed that the soy sauce residue contained in the powdered soy sauce forms particles as the powdered soy sauce together with a soy sauce component, an insoluble fiber and a protein in the soy sauce residue preferentially absorb moisture, and the influence of heating is decreased, thereby improving the solidification resistance of the powdered soy sauce.

More specifically, the soy sauce residue forms particles as the powdered soy sauce together with the soy sauce component, and in the case of spherical particles having a high aspect ratio, the soy sauce residue is present in a large amount in centers of the particles. When the amount of water in the air and the amount of water generated by accelerating the Maillard reaction or the like by heating are increased, the influence of water molecules on the soy sauce component on surfaces of the particles can be delayed due to the moisture being absorbed first in the soy sauce residue present in a large amount in the centers of the particles. On the other hand, in the case in which no soy sauce residue is contained, water molecules are immediately adsorbed to the soy sauce component, and the soy sauce component is dissolved. Therefore, it is considered that solidification of the powdered soy sauce starts.

In this regard, the present invention is not limited to those having the above mechanism of action.

### (Soy sauce residue)

The soy sauce residue is, as well known, a residue after a soy sauce is squeezed out after the soybeans, which are main raw materials, are fermented with a *koji* starter or the like in a soy sauce producing process of a *koikuchi* (dark-colored) soy sauce, a soy sauce with a low sodium chloride content, an *usukuchi* (light-colored) soy sauce, a *tamari* (rich) soy sauce, a rebrewed soy sauce, a *shiro* (very light-colored) soy sauce, or the like.

In the present invention, the soy sauce residue is preferably used in the form of a powdered soy sauce residue. Hereinafter, the soy sauce residue used in the present invention is described as the form of the powdered soy sauce residue, and the present invention is not limited to the form of the following powdered soy sauce residue.

The powdered soy sauce residue can be obtained, for example, by sequentially performing the following steps (1) to (4).
(1) Based on a general method for producing a soy sauce, a soy sauce *koji* is added to a mixture of steamed defatted soybeans and crushed wheat to produce a soy sauce *koji.*
(2) Next, the soy sauce *koji* and a saline solution are mixed, and the mixture is fermented and aged by a common method to produce a soy sauce *moromi.*
(3) The soy sauce *moromi* is packed into a filter cloth, and a liquid obtained by squeezing the filter cloth is a soy sauce. A solid matter remaining on the filter cloth is a soy sauce residue.
(4) The soy sauce residue is dried to have a water content of 14 mass% or less and preferably 3 mass% to 8 mass%, and then the dried soy sauce residue is crushed to obtain a powdered soy sauce residue. The drying and crushing methods of the soy sauce residue are not particularly restricted, and any commonly known methods can be used. For example, the drying of the soy sauce residue can be performed by a general commercial drier, and the crushing of the soy sauce residue can also be performed using a commercial industrial large crusher or the like. As the industrial large crusher, for example, a high-speed crusher (high-speed crusher HS-30 manufactured by Nakata MFG. Co., Ltd.) can be used.

The powdered soy sauce residue preferably contains dietary fiber derived from the soy sauce residue. Examples of the dietary fiber derived from the soy sauce residue include cellulose and lignin.

The powdered soy sauce residue preferably contains 1 mass% or more of dietary fiber, more preferably 5 mass% or more of dietary fiber, still more preferably 15 mass% or more of dietary fiber, and particularly preferably 25 mass% or more of dietary fiber. When the dietary fiber content is in the above range, a better solidification resistance effect is obtained. The upper limit of the dietary fiber content is not particularly restricted but is, for example, 45 mass% or less.

The powdered soy sauce residue may contain water, an ash content, protein, lipid, carbohydrate, salt and another component in addition to the dietary fiber.

The ash content of the powdered soy sauce residue is, for example, 3 mass% to 20 mass%. The ash content means the amount of residue excluding organic materials and water remaining after ashing a food at a high temperature, and examples thereof include minerals such as potassium, sodium, and iron, and the like.

The protein content of the powdered soy sauce residue is, for example, 20 mass% to 60 mass%, and may be 20 mass% to 45 mass%.

The lipid content of the powdered soy sauce residue is, for example, 2 mass% to 22 mass%, and may be 2 mass% to 15 mass%.

The carbohydrate (including dietary fiber) content of the powdered soy sauce residue is, for example, 10 mass% to 40 mass%. Examples of the carbohydrate (including dietary fiber) include cellulose and lignin.

The salt content of the powdered soy sauce residue is, for example, 2 mass% to 25 mass%, and may be 5 mass% to 25 mass%.

The powdered soy sauce residue also acts as an excipient in addition to the effect of improving the solidification resistance. Therefore, the powdered soy sauce residue preferably accounts for 25 mass% to 100 mass%, more preferably 75 mass% to 100 mass%, in the excipient contained in the powdered soy sauce of the present invention. Note that the powdered soy sauce residue can account for 100 mass% of the excipient contained in the powdered soy sauce of the present invention.

As an excipient other than the powdered soy sauce residue, for example, various starches used for spray drying, modified starches such as oxidized starches, dextrin, and the like can be used.

Moreover, the powdered soy sauce residue is preferably contained at 6.0 mass% or more, more preferably contained at 10 mass% or more, still more preferably contained at 15 mass% or more, and particularly preferably contained at 20 mass% or more, as a solid content based on the powdered soy sauce of the present embodiment. When the powdered soy sauce of the embodiment contains the powdered soy sauce residue as described above, a better solidification resistance effect is obtained.

Moreover, the powdered soy sauce residue is preferably contained at 50 mass% or less, more preferably contained at 35 mass% or less, and still more preferably contained at 25 mass% or less, as a solid content based on the powdered soy sauce of the present embodiment. When the powdered soy sauce of the present embodiment contains the powdered soy sauce residue as described above, an excellent solidification resistance effect is obtained without impairing the taste of the soy sauce. When the amount of the excipient contained in the powdered soy sauce is more than 50 mass%, the solidification resistance is very excellent, but the taste of the soy sauce gradually weakens. When the amount of the excipient is more than 58 mass%, the taste of the soy sauce further weakens.

Moreover, the powdered soy sauce residue is preferably contained at 6.0 mass% to 50 mass%, more preferably contained at 10 mass% to 35 mass%, and particularly preferably contained at 15 mass% to 25 mass%, as a solid content based on the powdered soy sauce of the present embodiment.

The powdered soy sauce residue is not particularly restricted, but for example, powdered soy sauce residue in which 80 mass% of the powder particles distribute in 15 µm to 112 µm and in which the median diameter is 40 µm to 120 µm can be used. The median diameter means an average particle diameter (D₅₀) at 50% of an integrated value in a particle size distribution obtained by a laser diffraction/scattering method, and can be measured using, for example, an MT-3000 laser diffraction/scattering particle size analyzer manufactured by Nikkiso Co., Ltd.

It is considered that, in the powdered soy sauce of the present embodiment, the powdered soy sauce residue contained in the powdered soy sauce forms particles as the powdered soy sauce together with the soy sauce component, the insoluble fiber and protein in the soy sauce residue preferentially absorb moisture, and/or the influence of heating is reduced, so that it is presumed that the moisture absorption of the powdered soy sauce is prevented, and the solidification resistance of the powdered soy sauce is significantly improved. Therefore, the aspect ratio of the particles of the powdered soy sauce of the present embodiment needs to be in a specific range, and an average value of the aspect ratios is 0.85 to 1, preferably 0.90 to 1, more preferably 0.95 to 1, and still more preferably 0.97 to 1. The aspect ratio of the particle of the powdered soy sauce means the minor axis size (width)/major axis size (length) of the particle, and the average aspect ratio is measured by the following method.

The powdered soy sauce is observed in any region using a microscope, and 50 particles are freely selected from the captured images. The minor axis sizes (widths) and the major axis sizes (lengths) of the selected 50 particles are measured with vernier calipers or the like, and the aspect ratios of the particles of the powdered soy sauce are calculated. Then, the average of the aspect ratios of the 50 particles is determined, and the average is used as the average value of the aspect ratios of the particles in the powdered soy sauce.

### <Method for producing powdered soy sauce>

The method for producing a powdered soy sauce of an embodiment of the present invention includes a step of adding a soy sauce residue, for example, a powdered soy sauce residue, to a liquid soy sauce, and then conducting a dry-powdering process on the liquid soy sauce.

The method for producing a powdered soy sauce of the present embodiment is based on the finding that, when the dry-powdering process is conducted after adding the powdered soy sauce residue to the liquid soy sauce, the solidification resistance of the powdered soy sauce is significantly improved compared with the case in which the above powdered soy sauce residue is added after the dry-powdering process.

Although the reason for the above is not clear, this is believed to be because the powdered soy sauce residue contained in the powdered soy sauce forms particles as the powdered soy sauce together with the soy sauce component. That is, it is presumed that the powdered soy sauce residue contained in the powdered soy sauce residue forms particles together with the soy sauce component, thereby preventing the powdered soy sauce from absorbing moisture.

More specifically, when the dry-powdering process is conducted after adding the powdered soy sauce residue to the liquid soy sauce, the soy sauce residue forms particles as the powdered soy sauce together with the soy sauce component, and in the case of spherical particles having a high aspect ratio, the soy sauce residue is present in a large amount in centers of the particles. When the amount of water in the air and the amount of water generated by accelerating the Maillard reaction or the like by heating are increased, the influence of water molecules on the soy sauce component on surfaces of the particles can be delayed due to the moisture being absorbed first in the soy sauce residue present in a large amount in the centers of the particles. Therefore, it is presumed that the solidification resistance of the powdered soy sauce is improved. In this regard, the present invention is not limited to those having the above mechanism of action.

The liquid soy sauce is not particularly restricted, and examples thereof include a *koikuchi* (dark-colored) soy sauce, a soy sauce with a low sodium chloride content, an *usukuchi* (light-colored) soy sauce, a *tamari* (rich) soy sauce, a rebrewed soy sauce, a *shiro* (very light-colored) soy sauce and the like. Moreover, examples thereof include a soy sauce in the production process, an unheated soy sauce, a *kiage* (just pressed) soy sauce, and the like.

As it is well known, a liquid soy sauce is produced by mixing steamed soybeans and roasted crushed wheat as protein-containing raw materials, inoculating and culturing a seed *koji* starter for a soy sauce therein to prepare a soy sauce *koji,* adding an adequate amount of a saline solution thereto to prepare a *moromi* (*moromi-mash*)*,* fermenting for a certain period, aging to prepare an aged *moromi* (*moromi-mash*)*,* finally pressing, filtering, pasteurizing and clearing.

Examples of the method for producing a soy sauce with a low sodium chloride content include a method using a saline solution having a concentration as low as possible to avoid spoilage, a method using a saline solution having a lower concentration by preventing spoilage using an alcohol in combination for brewing water, a method for producing a soy sauce with a low sodium chloride content by desalting a soy sauce which is obtained by a normal method and which has a sodium chloride concentration of 15 to 18 mass% by electrodialysis, membrane process or the like, a method of replacing a part of the sodium chloride in the soy sauce with potassium chloride (KCl) (JPS38-6582B, JPS56-68372A and JP2006-87328A) and a production method in which the amounts of the aroma component and the taste component in the soy sauce are adjusted in specific ranges (WO2011/034049).

The dry-powdering process can be conducted, for example, by a method generally used in the field, such as the spray drying method, the drum drying method and the freeze-drying method. Of these, the spray drying method is preferable.

In the case of using the spray drying method, the liquid soy sauce is absorbed by the water-insoluble soy sauce residue powder, and the liquid soy sauce is gathered on a surface of the soy sauce residue powder, is formed in a circular granular shape by a surface tension, and is dried as it is. Therefore, the particles of the obtained powdered soy sauce are more spherical, and the above aspect ratio is achieved.

Examples of the device used for spray drying include a pressure nozzle spray dryer, a two-fluid nozzle spray dryer, a rotary disc (disc atomizer) spray dryer, a spray drying/granulation dryer, and the like. The spray drying conditions are not different from the spray drying conditions for a regular liquid soy sauce and are appropriately determined. Specifically, for example, with an actual nozzle device, powdering is preferably conducted under the conditions of an air intake (inlet) temperature of 150°C to 230°C, an outlet temperature of 85°C to 130°C and a feed amount of 500 liter/hour to 2000 liter/hour.

The method for producing a powdered soy sauce of the present embodiment may be conducted according to the steps (for example, a step of preparing a soy sauce *koji* (koji-making), a step of preparing a soy sauce *moromi* (*moromi-mash*) (mixing of the soy sauce *koji* and a saline solution), a fermentation/aging step of the soy sauce *moromi* (*moromi-mash*)*,* a pressing step and the like) and the conditions of a general method for producing a soy sauce except for conducting the step of dry-powdering process.

The heating solidification resistance of the powdered soy sauce of the present embodiment can be evaluated based on the solidification strength of a sample after heating. The moisture absorption solidification resistance of the powdered soy sauce of the present embodiment can be evaluated based on the solidification strength of a sample stored under a high-humidity environment. The solidification strength here refers to the strength of the powder as an indicator for the difficulty of solidification of the powdered soy sauce and can be indicated by the load at breaking (force at breaking) measured using a rheometer (creepmeter) under specific conditions after a predetermined process. A lower numerical value of solidification strength means that the powder does not easily solidify during storage, which means that the solidification resistance is excellent.

Specifically, the force at breaking (the maximum load) of the powdered soy sauce of the present embodiment measured by a rheometer using a cylindrical plunger having a diameter of 1 mm under the conditions of a measurement speed of 1 mm/second and a distortion factor of 50% after a heating solidification process (storage for three hours in an atmosphere adjusted at a temperature of 80°C and a relative humidity of30%) or a moisture absorption solidification process (storage for three hours in an atmosphere adjusted at a temperature of 30°C and a relative humidity of 80%) is preferably 200 g/mm² or less, more preferably 120 g/mm² or less, and particularly preferably 50 g/mm² or less.

### [Examples]

The present invention will be described in further detail below by Examples. Here, the present invention is not limited to these Examples. In the following, "%" representing a content ratio of each component is based on mass unless otherwise specified.

### Experimental Example 1

### <Production of powdered soy sauce residue>

A powdered soy sauce residue was produced using soy sauce residues obtained during the production of a *koikuchi* (dark-colored) soy sauce.

Specifically, based on a general method for producing a *koikuchi* (dark-colored) soy sauce, a soy sauce *koji* was added to a mixture of steamed defatted soybeans and crushed wheat to produce a soy sauce *koji.*

Next, the soy sauce *koji* and a saline solution were mixed, and the mixture was fermented and aged by a common method to produce a soy sauce *moromi.*

In the case in which a soy sauce is produced from the soy sauce *moromi,* the soy sauce *moromi* is packed into a filter cloth, and a liquid obtained by squeezing the filter cloth was a soy sauce. A solid matter remaining on the filter cloth is a soy sauce residue.

The soy sauce residue was dried to have a water content of 4.0% or less, and then crushed with a high-speed crusher (Retsch ZM1, manufactured by NISSEI Corporation) to produce a powdered soy sauce residue.

### <Production of powdered soy sauce>

Separately, an excipient was added to a liquid *koikuchi* (dark-colored) soy sauce obtained by a production method similar to the production method of the powdered soy sauce residue to produce powdered soy sauces of Test Examples 1 to 6 and Comparative Example.

Specifically, an excipient containing an oxidized starch and/or a powdered soy sauce residue was added in an amount of 10 g to 40 g (w/v) to 100 ml of a liquid soy sauce (*koikuchi* (dark-colored) soy sauce, sodium chloride concentration: 16% (w/v)), and heated to 85°C and dissolved and suspended while being stirred. The blending ratio of the oxidized starch and the powdered soy sauce residue, which are excipients, was set to any one of (1) 10:0, (2) 2.5:7.5, (3) 5:5, (4) 7.5:2.5, and (5) 0: 10, as a mass ratio of the former: the latter.

Next, the solutions were spray-dried with a Mobile Minor spray dryer (TM-2000 Model-A; manufactured by NIRO JAPAN) under the conditions of an inlet temperature of 150°C to 160°C and an outlet temperature of 90°C to 95°C, and powdered soy sauces of Test Examples 1 to 6 and Comparative Example were thus obtained.

The powdered soy sauce of Comparative Example, which contains no soy sauce residue, was produced by directly spray-drying a mixed liquid obtained by adding a 10% (w/v) oxidized starch to a liquid soy sauce by a spray drying method.

### <Preparation of test samples>

The powdered soy sauces (Comparative Example, Test Examples) obtained as described above were applied to Petri dishes (a diameter of 35 mm, a depth of 10 mm), and the surfaces were scraped off with a spatula into flat surfaces. Test samples for evaluation were thus produced.

### <Test method>

- Heating solidification test: the test sample was stored for three hours in an atmosphere adjusted to a temperature of 80°C and a relative humidity of 30%, thereby performing the heating solidification test.
- Moisture absorption solidification test: the test sample was stored for three hours in an atmosphere adjusted to a temperature of 30°C and a relative humidity of 80%, thereby performing the moisture absorption solidification test.

### (Solidification strength)

As an evaluation method of solidification resistance, the solidification strength (strength at breaking) of the powdered soy sauce after the heating solidification test and the moisture absorption solidification test was measured.

Specifically, the forces at breaking (the maximum loads at breaking: g/mm²) of the test samples stored under the above conditions were measured with a rheometer (RHEONER II CREEP METER RE2-33005; manufactured by YAMADEN Co., Ltd.) under the conditions of a load cell for 2 kgf, a cylindrical plunger with a contact face diameter of 1 mm, a measurement speed of 1 mm/sec and a measurement distortion factor of 50%, and the averages of 15 specimens (five points/one Petri dish × 3 dishes) were determined to obtain the solidification strength.

Moreover, the solidification strengths were evaluated based on the following indicators.
A: 50 g/mm² or less
B: more than 50 g/mm² and 120 g/mm² or less
C: more than 120 g/mm² and 200 g/mm² or less
D: more than 200 g/mm²
C or better was considered as passing.

### (Average value of aspect ratio)

An average value of the aspect ratio of the obtained powdered soy sauce was determined as follows.

Each of the powdered soy sauces was observed in any region using a microscope, and 50 particles were freely selected from the captured images. The minor axis sizes (widths) and the major axis sizes (lengths) of the selected 50 particles were measured with vernier calipers or the like, and the aspect ratios of the particles of the powdered soy sauce were calculated. Then, the average of the aspect ratios of the 50 particles was determined, and the average was used as the average value of the aspect ratios of the particles in the powdered soy sauce.

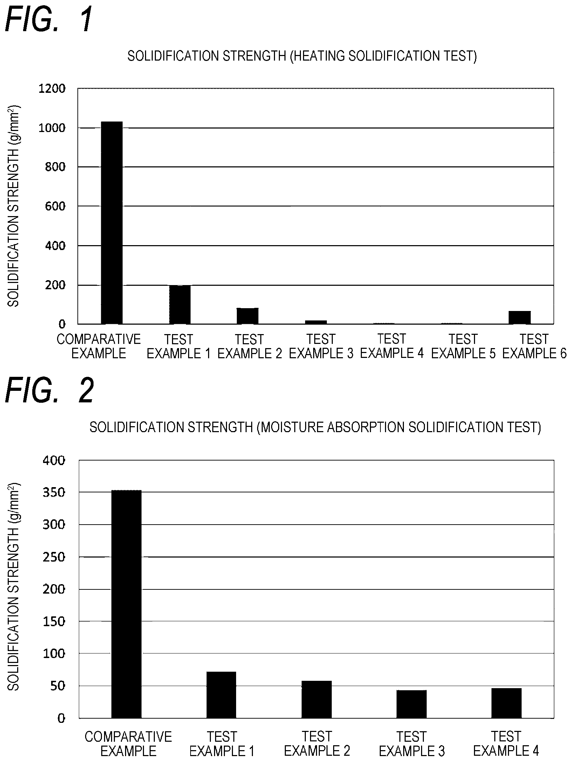

The results are shown in Tables 1 and 2 and FIGS. 1 and 2. FIG. 1 is a graph of the solidification strength (heating solidification test) shown in Table 1. FIG. 2 is a graph of the solidification strength (moisture absorption solidification test) shown in Table 2. In Tables 1 and 2, the aspect ratios of the powdered soy sauces being "0.85 to 1" means that the average value of the aspect ratios of the powdered soy sauces is in the range of 0.85 to 1.

### (Observation of surface state and internal state)

As another evaluation method of solidification resistance, the solidification strength was evaluated by visually observing a surface state and an internal state of the test samples stored under the above conditions by persons in charge who had engaged in production/development of powdered soy sauces and who had professional knowledge. Before the evaluation, the persons agreed about the evaluation of each item to standardize the evaluation.

The above evaluation was made based on the following indicators.

### [Powder state]

A: powdery and smooth from the surface to the inside (almost the same as the state before storage)
B: the surface was powdery and slightly moist, while the inside was powdery but had slightly poor fluidity
C: the surface was slightly harder, but the inside was moist but had poor fluidity
D: the surface was firm, but the inside was slightly harder, not powdery, and was moist
B or better was considered as passing.

### (Reference: taste of soy sauce)

The soy sauce taste of each powdered soy sauce was evaluated in a reference test. Specifically, it is necessary to sufficiently feel the taste of a soy sauce even in the case of a powdered soy sauce, and therefore, regarding the strength of the soy sauce taste, the test samples stored under the above conditions were tasted by persons in charge who had engaged in production/development of powdered soy sauces and who had professional knowledge, to evaluate the presence or absence of the soy sauce taste by the following indicators.
A: a strong soy sauce taste was obtained.
B: a soy sauce taste was obtained.
C: the soy sauce taste was slightly weak.
D: the soy sauce taste was weak.

The results are shown in Tables 1 and 2.

### [Table 1]

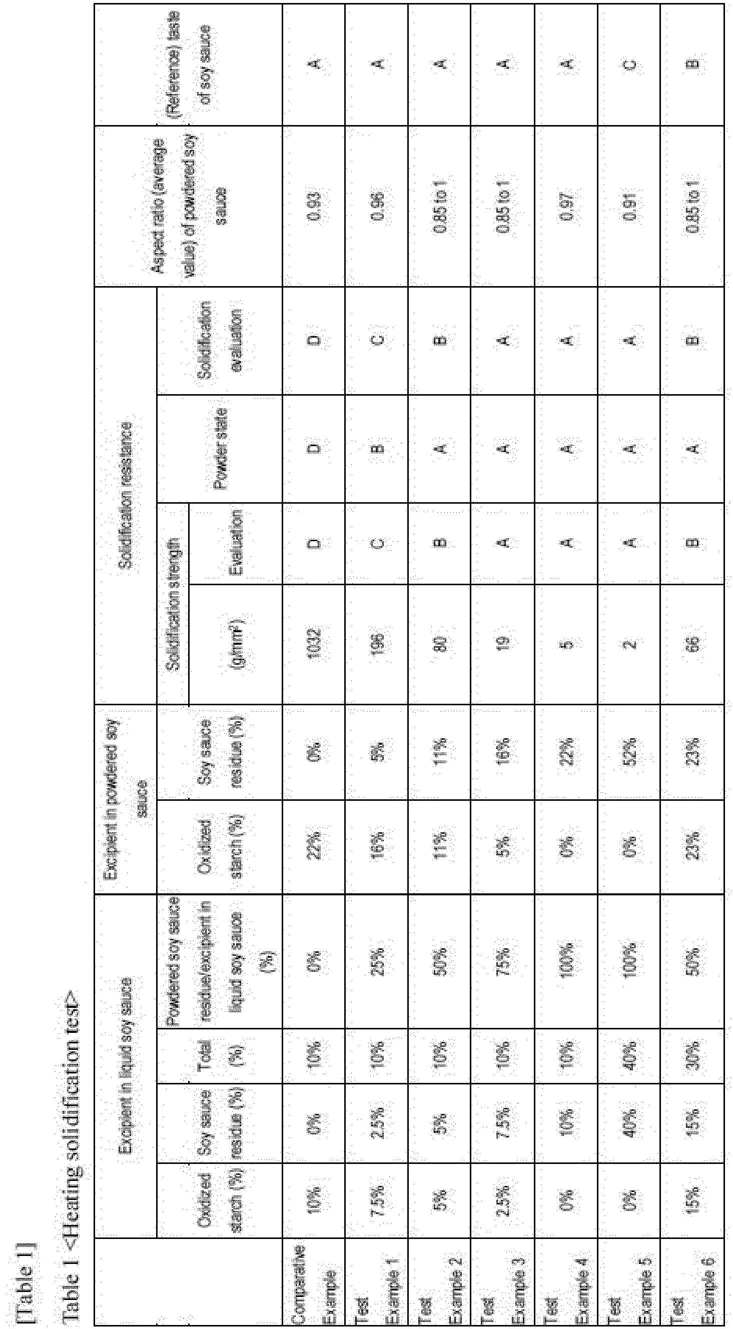

### [Table 2]

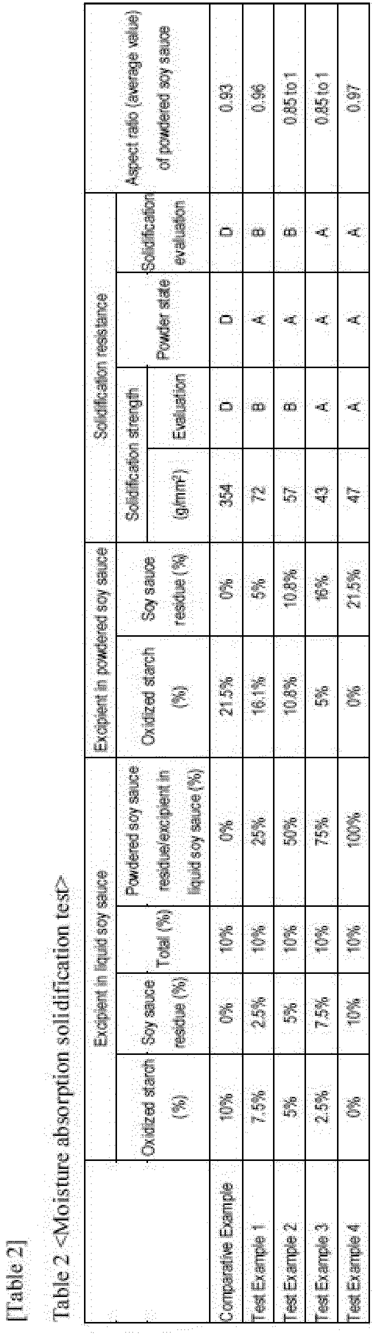

From the results of the heating solidification test, good solidification resistance was obtained in a case in which the soy sauce residue is blended when a content of the soy sauce residue in the powdered soy sauce is 5% or more, and better solidification resistance was obtained in a case in which 11% or more of the soy sauce residue was blended. Good solidification resistance was obtained by mixing 25% or more of the powdered soy sauce residue in the liquid soy sauce, and better solidification resistance was obtained by mixing 50% or more of the powdered soy sauce residue.

From the results of the moisture absorption solidification test, good solidification resistance was obtained when the content of soy sauce residue in the powdered soy sauce was blended at 5% or more. Good solidification resistance was obtained by mixing 25% or more of the powdered soy sauce residue in the liquid soy sauce.

### Experimental Example 2

A test was performed in a case in which only the soy sauce residue was used as an excipient.

### (Production of powdered soy sauce)

The powdered soy sauce residues obtained in Experimental Example 1 were added to the liquid soy sauces obtained in Experimental Example 1 such that the excipient content in the liquid soy sauce is 1% to 60%, and the excipient content in the powdered soy sauce is 3% to 62% as shown in Tables 3 and 4, and powdered soy sauces were obtained by the spray drying method shown in Experimental Example 1.

The preparation of the test samples, the test method, and the evaluation were carried out in the same manner as in Experimental Example 1.

The results are shown in Tables 3 and 4. Test Examples 4 and 5 are the same as Test Examples 4 and 5 of Experimental Example 1, respectively. In Tables 3 and 4, the aspect ratios of the powdered soy sauces being "0.85 to 1" means that the average value of the aspect ratios of the powdered soy sauces is in the range of 0.85 to 1.

### [Table 3]

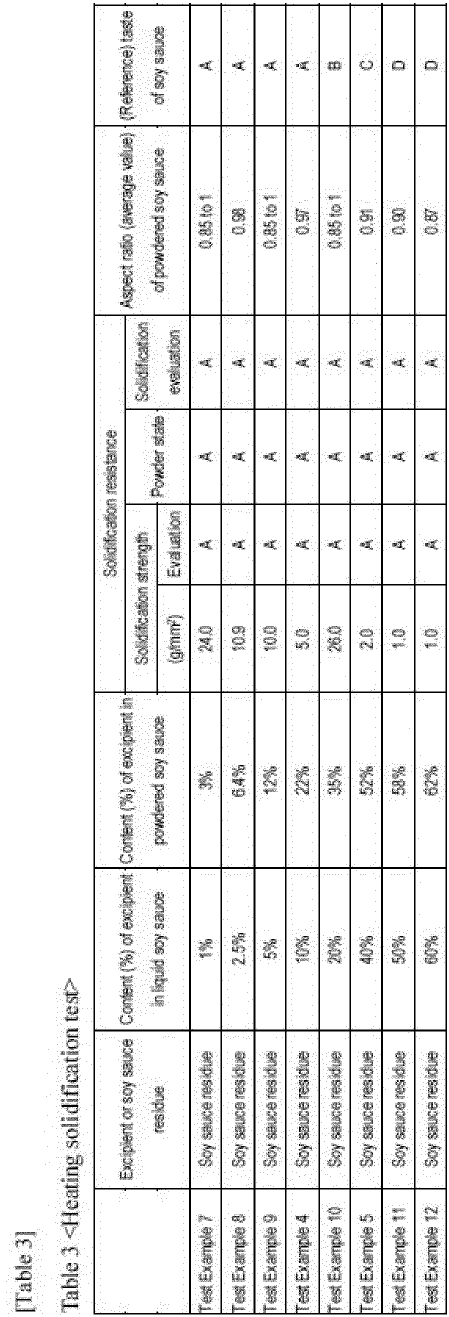

### [Table 4]

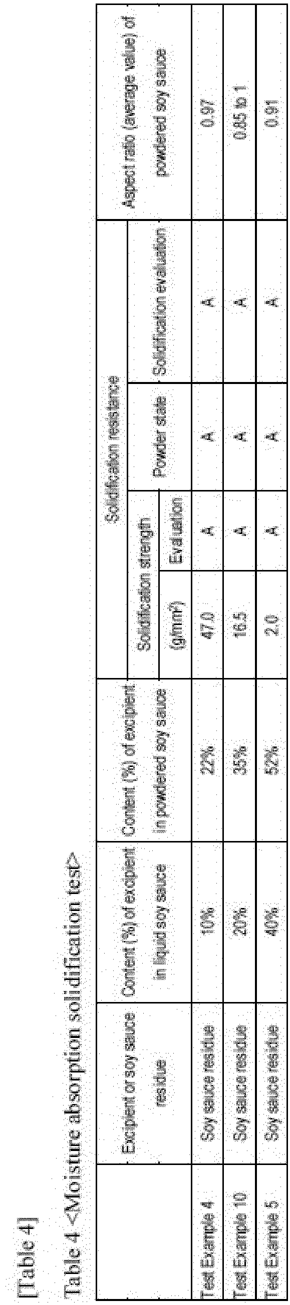

Regarding the heating solidification test and the moisture absorption solidification test, the solidification strengths of powdered soy sauces, which were produced by blending the powdered soy sauce residue such that 1% or more (3% or more in the powdered soy sauce) of the powdered soy sauce residue was contained in the liquid soy sauce, and performing spray drying, were good.

It should be noted that when the powdered soy sauce residue was blended with a liquid soy sauce to reach 40% or more (52% or more in the powdered soy sauce), the soy sauce taste was weakened, and when the powdered soy sauce residue was blended in the content of 60% or more (62% or more in the powdered soy sauce), the taste was further weakened.

### Experimental Example 3

The solidification resistance based on the addition period of the powdered soy sauce residue was examined.

### [Powdered soy sauce produced by spray drying after adding soy sauce residue powder to liquid soy sauce]

The powdered soy sauce of Test Example 4 of Experimental Example 1 was used.

### [Powdered soy sauce produced by adding powdered soy sauce to powdered soy sauce residue]

A powdered soy sauce obtained by adding 21.5% of the powdered soy sauce residue obtained in Experimental Example 1 to the powdered soy sauce obtained by powdering the *koikuchi* (dark-colored) soy sauce having no excipient by the spray drying method (Test Example 13) was used.

### [Powdered soy sauce produced by adding liquid soy sauce to powdered soy sauce residue]

To 0.2 kg of the powdered soy sauce residue (the powdered soy sauce residue produced in Experimental Example 1) in a 1 L stainless steel container maintained at 60°C, 500 mL of liquid soy sauce was gradually added while stirring to obtain a mixture of the powdered soy sauce residue and the liquid soy sauce. This mixture was dried at 80°C for one hour and then crushed with a high-speed crusher (Retsch ZM1, manufactured by NISSEI Corporation) to obtain a powdered soy sauce obtained by adding a liquid soy sauce to a powdered soy sauce residue (Test Example 14). The water content of the obtained powdered soy sauce was 8%.

The preparation of the test samples, the test method, and the evaluation were carried out in the same manner as in Experimental Example 1.

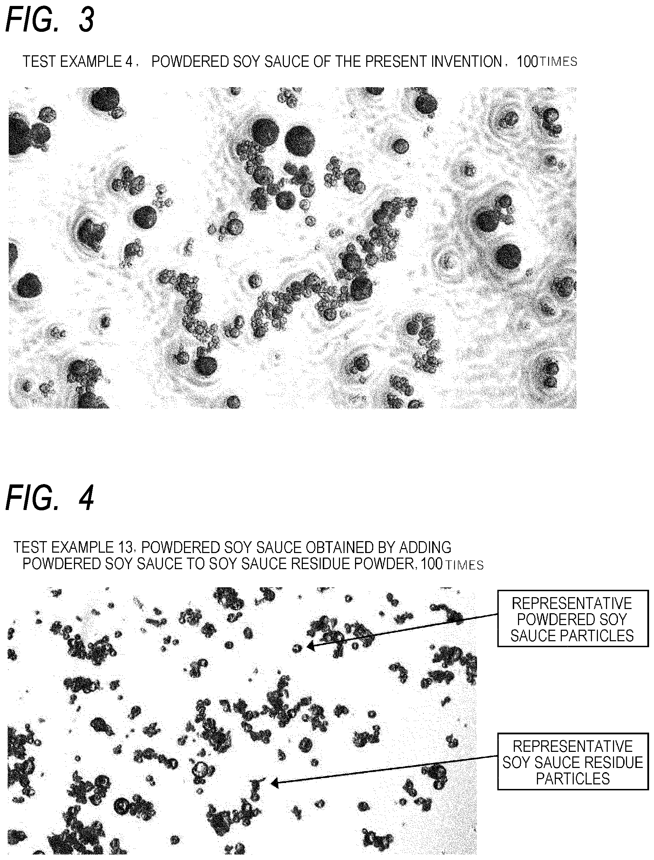

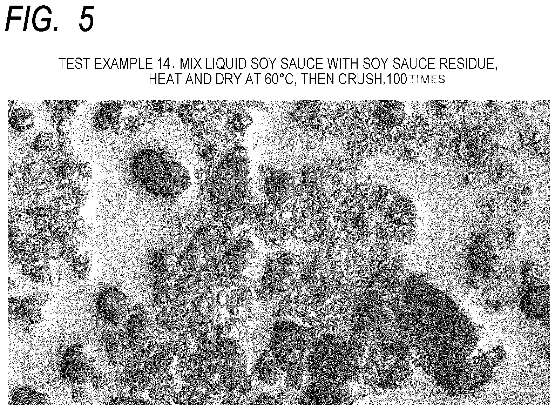

The results are shown in Tables 5 and 6. FIG. 3 shows a microscopic image of the powdered soy sauce of Test Example 4, FIG. 4 shows a microscopic image of the powdered soy sauce of Test Example 13, and FIG. 5 shows a microscopic image of the powdered soy sauce of Test Example 14.

### [Table 5]

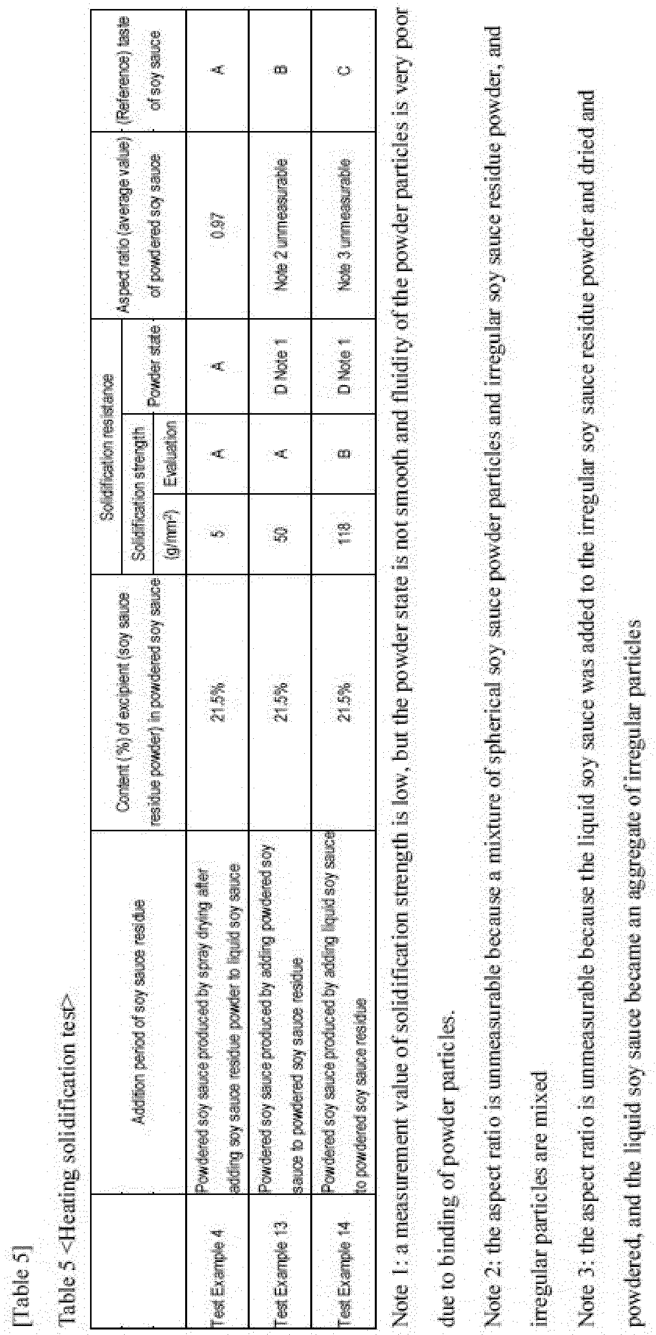

### [Table 6]

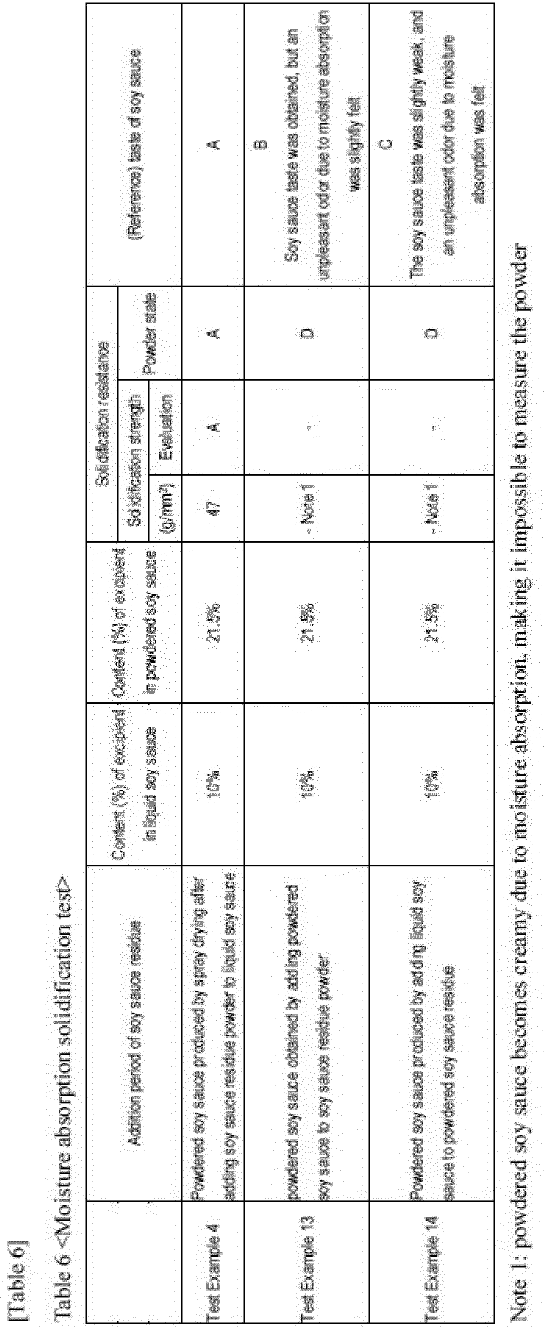

In Test Examples 13 and 14, the fluidity of the powder surface was poor in the heating solidification test. In the moisture absorption solidification test, the test sample was in a cream state, and the solidification strength by the rheometer could not be measured. Good solidification resistance was not obtained in both tests.

In order to improve the solidification resistance, it is necessary to perform powdering after adding a soy sauce residue into the liquid soy sauce before the powdering.

As in the images shown in FIGS. 3 to 5, the powdered soy sauce of Test Example 4 (FIG. 3) had circular granular particles, and the length of the major axis size and the minor axis size can be accurately measured. However, the powdered soy sauce of Test Example 13 (FIG. 4) and Test Example 14 (FIG. 5) contained irregular particles, and the aspect ratio could not be measured. That is, it is considered that the soy sauce residue forms a circular particle shape together with the soy sauce component, which contributes to the solidification stability.

### Experimental Example 4

The effect of the solidification resistance due to the difference in types of soy sauce residue was checked.

### (Method for producing soy sauce residue)

The various soy sauce residues were produced by filtering a soy sauce *moromi* produced according to a general production method of a soy sauce with a filter cloth, and then drying a soy sauce residue remaining on the filter cloth at 80°C for one hour.

### [Soy sauce residue of koikuchi (dark-colored) soy sauce of soy sauce using defatted soybeans as raw material]

A soy sauce *koji* starter was added to a mixture of 1.8 kg of steamed commercial defatted soybeans and 1.8 kg of crushed roasted wheat to prepare a soy sauce *koji.* Then, the soy sauce *koji* was mixed with 1.6 kg of saline solution and 8 L of water, and the mixture was fermented and aged for six months to obtain a *moromi.* The *moromi* was filtered through a filter cloth, and then a soy sauce residue remaining on the filter cloth was dried to produce the soy sauce residue (Test Example 4).

### [Soy sauce residue for producing usukuchi (light-colored) soy sauce]

A soy sauce *koji* starter was added to a mixture of 1.8 kg of steamed commercial whole soybeans and 1.8 kg of crushed roasted wheat to prepare a soy sauce *koji.* Then the soy sauce *koji* was mixed with 1.6 kg of saline solution and 8 L of water, and the mixture was fermented and aged for six months to obtain a soy sauce *moromi.* An appropriate amount of *Amazake* (a sweet drink made from fermented rice) was added to the soy sauce *moromi,* followed by filtering through a filter cloth, and a soy sauce residue remaining on the filter cloth was dried to produce the soy sauce residue (Test Example 15).

### [Soy sauce residue for koikuchi (dark-colored) soy sauce using whole soybeans]

A soy sauce *koji* starter was added to a mixture of 1.8 kg of steamed commercial whole soybeans and 1.8 kg of crushed roasted wheat to prepare a soy sauce *koji.* Then, the soy sauce *koji* was mixed with 1.6 kg of saline solution and 8 L of water, and the mixture was fermented and aged for six months to obtain a soy sauce *moromi.* The soy sauce *moromi* was filtered through a filter cloth, and then a soy sauce residue remaining on the filter cloth was dried to produce the soy sauce residue (Test Example 16).

### (Production method of powdered soy sauce)

The soy sauce residue after the various types of soy sauce *moromi* were filtered through a filter cloth was dried at 80°C for one hour until the water content reached 4.0% or less, and then was crushed with a high-speed crusher (model name: Retsch ZM1, manufactured by NISSEI Corporation) to produce powdered soy sauce residues from various soy sauce residues.

Various soy sauce residues were added in 10% (w/w) to a liquid *koikuchi* (dark-colored) soy sauce, and powdered soy sauces derived from various soy sauce residues were produced by the spray drying method.

The preparation of the test samples, the test method, and the evaluation were carried out in the same manner as in Experimental Example 1.

The results are shown in Tables 7 and 8. Comparative Example and Test Example 4 are the same as Comparative Example and Test Example 4 of Experimental Example 1, respectively.

### [Table 7]

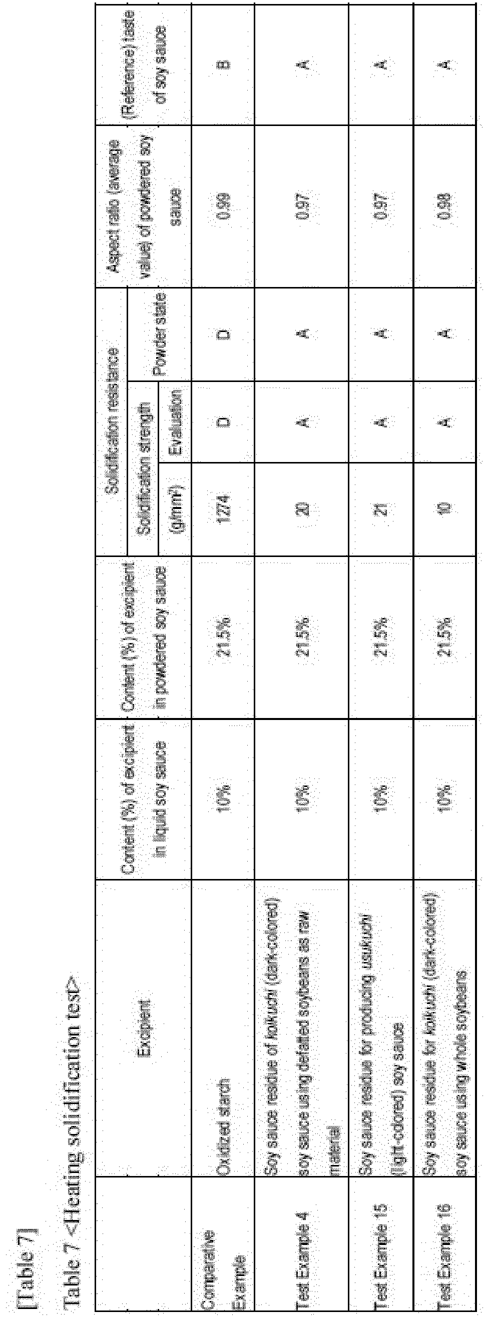

### [Table 8]

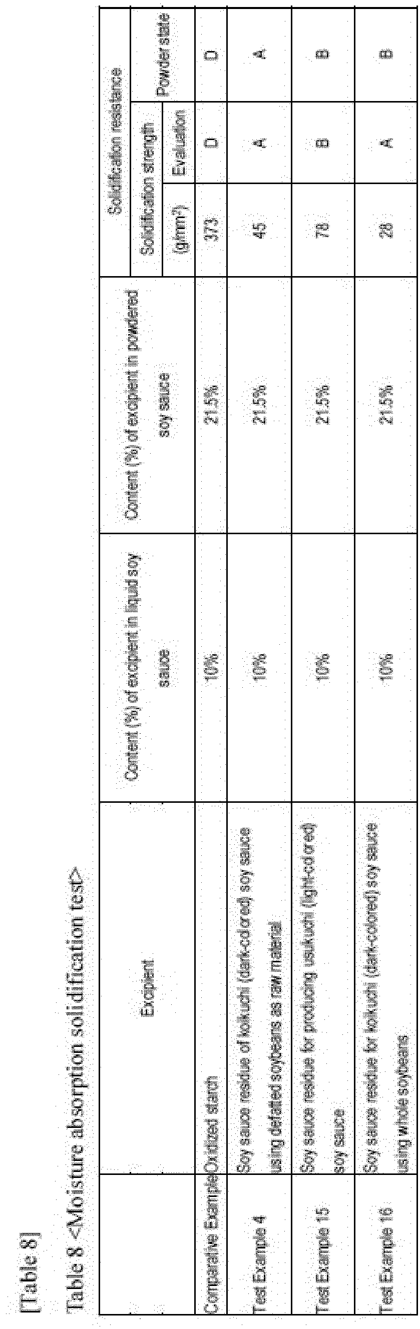

In Test Examples 4, 15, and 16, all the test results of the moisture absorption solidification test, the heating solidification test, the powder state, and the taste of the soy sauce were good. Therefore, a sufficient solidification resistance effect was confirmed regardless of the type of soy sauce residues.

Although embodiments have been described above referring to the drawings, it is needless to mention that the present invention is not limited to the examples. It is obvious that one skilled in the art can reach modified examples or corrected examples within the scope described in the claims, and it is understood that the examples of course belong to the technical scope of the present invention. The constituent features in the embodiments may be combined freely within the scope which does not deviate from the contents of the present invention.

The present application is based on a Japanese patent application filed on May 30, 2022 (patent application No. JP2022-087924), and the contents thereof are incorporated in the present application by reference.

## Claims

1. A powdered soy sauce, comprising a soy sauce residue and having an average value of aspect ratios of 0.85 to 1.

2. The powdered soy sauce according to claim 1, wherein the soy sauce residue is contained at 6.0 mass% to 50 mass% as a solid content based on the powdered soy sauce.

3. The powdered soy sauce according to claim 1 or 2, which is obtainable by dry-powdering a liquid soy sauce to which the soy sauce residue is added.

4. A method for producing a powdered soy sauce, the method comprising a step of adding a soy sauce residue to a liquid soy sauce and then conducting a dry-powdering process on the liquid soy sauce.
